(19) Europäisches Patentamt
European Patent Office
Office européen des brevets

(11) **EP 4 412 080 A1**

(12) **DEMANDE DE BREVET EUROPEEN**

(43) Date de publication:
**07.08.2024 Bulletin 2024/32**

(21) Numéro de dépôt: **24153376.9**

(22) Date de dépôt: **23.01.2024**

(51) Classification Internationale des Brevets (IPC):
***H02P 29/66*** *(2016.01)*

(52) Classification Coopérative des Brevets (CPC):
**H02P 29/662**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **06.02.2023 FR 2301075**

(71) Demandeur: **IFP Energies nouvelles**
**92500 Rueil-Malmaison (FR)**

(72) Inventeurs:
• **TRINH, Ngoc-Tu**
  **92852 RUEIL-MALMAISON CEDEX (FR)**
• **ZEIN, Ismail**
  **92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(54) **PROCÉDÉ DE DÉTERMINATION EN TEMPS RÉEL DE LA TEMPÉRATURE D'UN ROTOR D'UNE MACHINE ÉLECTRIQUE**

(57) La présente invention concerne un procédé de détermination de la température du rotor d'une machine électrique, dans lequel on acquiert (ACQ) les tensions, les courants et la position et/ou la vitesse du rotor, et dans lequel on met en oeuvre une combinaison de trois modèles interconnectés (modèle de flux magnétique des aimants permanents (MFA), modèle magnétique de flux du stator (MFS), et modèle de résistance du stator (MRS)) pour déterminer le flux magnétique des aimants permanents au moyen de trois filtres de Kalman. Le flux magnétique des aimants permanents ainsi estimé permet ensuite de déterminer la température du rotor (TR).

Figure 1

**Description**

**Domaine technique**

La présente invention concerne le domaine de la surveillance et du contrôle des machines électriques, en particulier pour les machines électriques synchrones à pôles saillants et les machines synchro-reluctantes. Ces machines électriques trouvent une application notamment dans le domaine des véhicules automobiles.

Classiquement, une machine électrique comprend un rotor (partie mobile) et un stator (partie fixe). Le rotor est habituellement logé à l'intérieur du stator. Généralement, le stator est de forme annulaire et est logé à l'intérieur d'un support tubulaire pour y être fixé.

Le stator comprend des générateurs de flux magnétique, généralement des bobinages électriques. Ces bobinages sont alimentés par une pluralité (classiquement trois) de phases électriques, afin de générer un champ magnétique tournant. De plus, selon le type de machine électrique, notamment pour les machines électriques synchrones à pôles saillants et synchro-reluctantes, le rotor peut comprendre des aimants permanents.

Lors du fonctionnement d'une telle machine électrique, les bobinages du stator sont parcourus par un courant électrique pour générer le champ magnétique nécessaire à l'entraînement en rotation du rotor.

Dans le domaine de machines électriques, la machine synchro-réluctante assistée d'aimants permanents est aujourd'hui de plus en plus développée dans de nombreuses applications industrielles en raison de son facteur de puissance, de son efficacité, de sa compacité et de sa capacité à fonctionner à haute vitesse. Grâce à l'aimant permanent dans la construction du rotor, le facteur de puissance est amélioré et les pertes du stator sont considérablement réduites par rapport aux machines synchro-réluctantes. De plus, le couple de réluctance créé dans une telle machine limite le besoin en aimant permanent, qui reste encore onéreux, et rend donc ce type de machine moins chère à produire.

Pour le suivi de l'état thermique de machine électrique, l'observation ou la mesure en temps réel de la température du rotor est importante, surtout pour surveiller l'état des aimants permanents afin d'éviter leur démagnétisation irréversible. Etant donné que la mesure de la température du rotor est une procédure complexe et coûteuse, l'estimation de celle-ci apparaît comme une solution technique adaptée.

**Technique antérieure**

Les méthodes d'estimation de la température de rotor pour une machine électrique, notamment une machine synchro-réluctante, sont multiples et diverses. Par exemple, on peut catégoriser ces méthodes de la manière suivante :

- Estimation basée directement sur un modèle de flux (sans phase de correction par les mesures) en mesurant le courant et la tension, un exemple de cette méthode est décrit notamment dans la demande de brevet EP2806556 (US9383265),
- Estimation basée sur un modèle mathématique et des estimateurs stochastiques ou observateurs déterministes, pour ces approches, une phase de correction de l'estimation est introduite par les mesures de courant et de tension, un exemple de cette approche est décrit notamment dans la demande de brevet US 2015/0381091,
- Estimation directe à travers des mesures spécifiques telles que la détection de composantes de la tension induite, un exemple de cette technique est décrit notamment dans la demande de brevet US8222844, et
- Estimation par injection d'harmoniques dans les bobines et évaluation de la partie réelle de l'impédance équivalente aux harmoniques, pour en déduire la température du rotor, un exemple de cette méthode est décrit notamment dans la demande de brevet US20150200614.

Toutefois, ces méthodes ne sont pas suffisamment robustes et précises, et peuvent être instables dans un environnement bruité ou discontinu, notamment dans le contrôle des machines électriques avec des stratégies de commutation de type Modulation de Largeur d'impulsion (MLI).

**Résumé de l'invention**

L'invention a pour but de déterminer en temps réel, de manière robuste, précise et stable la température du rotor d'une machine électrique. Dans ce but, la présente invention concerne un procédé de détermination de la température du rotor d'une machine électrique, dans lequel on acquiert les tensions, les courants et la position et/ou la vitesse du rotor, et dans lequel on met en oeuvre une combinaison de trois modèles interconnectés (modèle de flux magnétique des aimants permanents, modèle magnétique de flux du stator, et modèle de résistance du stator) pour déterminer le flux magnétique des aimants permanents au moyen de trois filtres de Kalman. Le flux magnétique des aimants permanents ainsi estimé permet ensuite de déterminer la température du rotor. L'interconnexion des trois modèles, permet notamment l'estimation de la résistance du stator, ce qui permet de rendre plus robuste l'estimation du flux magnétique des aimants permanents (avec une estimation précise de la résistance du stator), et donc une détermination robuste et précise de la température du rotor.

L'invention concerne en outre, un procédé et un système de contrôle et/ou de surveillance thermique d'une machine électrique.

L'invention concerne un procédé de détermination en temps réel de la température d'un rotor d'une machine électrique, ladite machine électrique comportant un stator et un rotor pourvu d'aimants permanents. Pour ce procédé, on met en oeuvre les étapes suivantes :

a. On acquiert les courants et les tensions dans des phases dudit stator, ainsi que la position et/ou la vitesse de rotation dudit rotor ;

b. On construit un modèle dynamique de flux magnétique desdits aimants permanents du rotor, ledit modèle de flux magnétique des aimants permanents reliant ledit flux magnétique des aimants permanents aux courants et aux tensions dans lesdites phases du stator, à la vitesse de rotation du rotor, ainsi qu'au flux magnétique dudit stator et à la résistance dudit stator ;

c. On construit un modèle dynamique de flux magnétique dudit stator, ledit modèle de flux magnétique du stator reliant ledit flux magnétique du stator aux courants et aux tensions dans lesdites phases du stator, à la vitesse de rotation du rotor, ainsi qu'au flux magnétique des aimants permanents et à la résistance dudit stator ;

d. On construit un modèle dynamique de la résistance dudit stator, ledit modèle de la résistance du stator reliant la résistance du stator aux courants et aux tensions dans lesdites phases du stator, à la vitesse de rotation du rotor, ainsi qu'au flux magnétique dudit stator et au flux magnétique desdits aimants permanents ;

e. On détermine le flux magnétique desdits aimants permanents en appliquant un filtre de Kalman linéaire audit modèle de flux magnétique des aimants permanents, ledit modèle de flux magnétique des aimants permanents étant appliqué aux courants et aux tensions acquis et à la vitesse du rotor acquise, ainsi qu'au flux magnétique dudit stator déterminé par un filtre de Kalman sans parfum appliqué audit modèle de flux magnétique du stator, et à la résistance du stator déterminée par un filtre de Kalman linéaire appliqué audit modèle de résistance du stator ; et

f. On détermine la température dudit rotor à partir dudit flux magnétique desdits aimants permanents déterminé et au moyen d'un coefficient thermique des aimants permanents dudit rotor.

Conformément une mise en oeuvre, on détermine la température du rotor au moyen de la formule suivante :

$$T_r = T_0 + \frac{1}{\beta}\left(1 - \frac{\hat{\phi}_{PM}(T_r)}{\phi_{PM}(T_0)}\right)$$ avec $T_r$ la température du rotor, $T_0$ la température ambiante, $\beta$ ledit coefficient thermique des aimants permanents du rotor, $\phi_{PM}(T_0)$ le flux magnétique des aimants permanents à la température ambiante, $\hat{\phi}_{PM}(T_r)$ le flux magnétique des aimants permanents déterminé à la température du rotor.

Selon un mode de réalisation, on détermine ledit coefficient thermique du rotor par une étape préalable expérimentale.

Selon un aspect, on acquiert lesdits courants et/ou lesdites tensions dans les phases du stator et/ou la position et/ou la vitesse du rotor par mesure.

Selon une option de réalisation, ledit modèle de flux magnétique du stator est défini par un modèle d'état avec une équation d'état de la forme : $\dot{X} = A(\omega)X + u$ avec $X = \begin{pmatrix} \phi_d \\ \phi_q \end{pmatrix}, u = \begin{pmatrix} V_d - RI_d \\ V_q - RI_q - \omega\phi_{PM} \end{pmatrix}, A(\omega) = \begin{pmatrix} 0 & \omega \\ -\omega & 0 \end{pmatrix}$

et une équation de mesure de la forme : $y_1 = f(X, \phi_{PM})$ avec $y_1 = \begin{pmatrix} I_d \\ I_q \end{pmatrix}$ et $f = \begin{pmatrix} f_d \\ f_q \end{pmatrix}$, $\phi_d$ $\phi_q$ étant le flux magnétique du stator dans le repère de Park, $V_d$, $V_q$ les tensions dans les phases du stator dans le repère de Park, $I_d$, $I_q$ les courants dans les phases du stator dans le repère de Park, $w$ la vitesse de rotation du rotor, $\phi_{PM}$ le flux magnétique des aimants permanents, $R$ la résistance du stator, $f_d$, $f_q$ les fonctions non linéaires dans les phases du stator dans le repère de Park.

Avantageusement, ledit modèle de flux magnétique des aimants permanents est défini par un modèle d'état avec une équation d'état de la forme : $\dot{\phi}_{PM} = 0$ et une équation de mesure $y_2 = \omega\phi_{PM} + (\omega\phi_d + RI_q)$ avec $y_2 = V_q$, $\phi_d$ étant le flux magnétique du stator direct dans le repère de Park, $V_q$ les tensions en quadrature dans les phases du stator dans le repère de Park, $I_q$ les courants en quadrature dans les phases du stator dans le repère de Park, $w$ la vitesse de rotation du rotor, $\phi_{PM}$ le flux magnétique des aimants permanents, $R$ la résistance du stator.

Conformément à un mode de réalisation, ledit modèle de la résistance de stator est défini par un modèle d'état avec une équation d'état de la forme : R = 0 et une équation de mesure de la forme $y_3 = R\sqrt{\left(I_d^2 + I_q^2\right)}$ avec

$$y_3 = V_R = \sqrt{\left(V_d + \omega\phi_q\right)^2 + \left(V_q - \omega(\phi_d + \phi_{PM})\right)^2}$$,

, $\phi_d$, $\phi_q$ étant le flux magnétique du stator dans le repère de Park, $V_d$, $V_q$ les tensions dans les phases du stator dans le repère de Park, $I_d$, $I_q$ les courants dans les phases du stator dans le repère de Park, $\omega$ la vitesse de rotation du rotor, $\phi_{PM}$ le flux magnétique des aimants permanents, R la résistance du stator.

Selon une mise en oeuvre, ledit modèle de flux magnétique du stator dépend de la résistance du stator et du flux magnétique des aimants permanents déterminés au pas de temps précédent.

Conformément à un aspect, le flux magnétique du stator est déterminé à une fréquence supérieure à la fréquence de détermination du flux magnétique des aimants permanents et de la résistance du stator.

De plus, l'invention concerne un procédé de contrôle et/ou de surveillance d'une machine électrique. Pour ce procédé, on met en oeuvre les étapes suivantes :

a. On détermine la température du rotor au moyen du procédé de détermination de la température du rotor selon l'une des caractéristiques précédentes ; et
b. On contrôle et/ou on surveille ladite machine électrique au moyen de ladite température du rotor déterminée.

En outre, l'invention concerne un système de contrôle et/ou de surveillance d'une machine électrique comprenant une machine électrique et un contrôleur pour mettre en oeuvre le procédé de contrôle et/ou de surveillance selon l'une des caractéristiques précédentes.

D'autres caractéristiques et avantages des procédés et du système selon l'invention, apparaîtront à la lecture de la description ci-après d'exemples non limitatifs de réalisations, en se référant aux figures annexées et décrites ci-après.

**Liste des figures**

La figure 1 illustre les étapes du procédé selon un premier mode de réalisation de l'invention.

La figure 2 illustre les étapes du procédé selon un deuxième mode de réalisation de l'invention.

La figure 3 illustre, pour un exemple, des courbes de la température du rotor en fonction du temps : la température réelle et la température déterminée au moyen du procédé selon l'invention.

La figure 4 illustre, pour l'exemple de la figure 3, des courbes des courants $I_d$, $I_q$ de référence et mesurés, ainsi que la vitesse de rotation du rotor en fonction du temps.

La figure 5 illustre, pour l'exemple des figures 3 et 4, la courbe de la résistance du stator en fonction du temps.

**Description des modes de réalisation**

La présente invention concerne un procédé de détermination, en temps réel, de la température d'un rotor d'une machine électrique. La machine électrique comprend un rotor et un stator, ce dernier étant équipé de bobinages connectés à plusieurs phases électriques, par exemple à trois phases électriques (ou quatre, cinq, six, neuf ou douze, etc. phases) pour générer un champ magnétique permettant la rotation du rotor. Le rotor comprend au moins deux aimants permanents pour la génération d'un champ magnétique.

Selon un aspect de l'invention, la machine électrique peut être une machine électrique synchrone à pôles saillants ou machine synchro-reluctante. En effet, le procédé est particulièrement adapté à ce type de machine, d'une part, car les trois modèles mis en oeuvre sont bien représentatifs de ce type de machine électrique, et car la température du rotor permet le contrôle et/ou la surveillance thermique d'une telle machine électrique. De préférence, la machine électrique peut être une machine synchro-réluctante assistée d'aimants permanents. En effet, ce type de machine électrique nécessite une information précise de la température du rotor, notamment pour leur contrôle, pour leur diagnostic, et pour leur surveillance.

Le procédé de détermination en temps réel de la température du rotor comprend les étapes suivantes :

1) Acquisition des courants, des tensions, de la position et/ou de la vitesse de rotation
2) Construction du modèle de flux magnétique du stator
3) Construction du modèle de flux magnétique des aimants permanents
4) Construction du modèle de résistance du stator
5) Détermination du flux magnétique des aimants permanents
6) Détermination de la température du rotor.

Les étapes 2, 3 et 4 sont indépendantes, et peuvent être réalisées dans cet ordre, dans un ordre inverse ou simultanément. Les étapes du procédé peuvent être mises en oeuvre par des moyens informatiques, notamment au moyen d'un contrôleur de la machine électrique. Ces étapes seront détaillées dans la suite de la description.

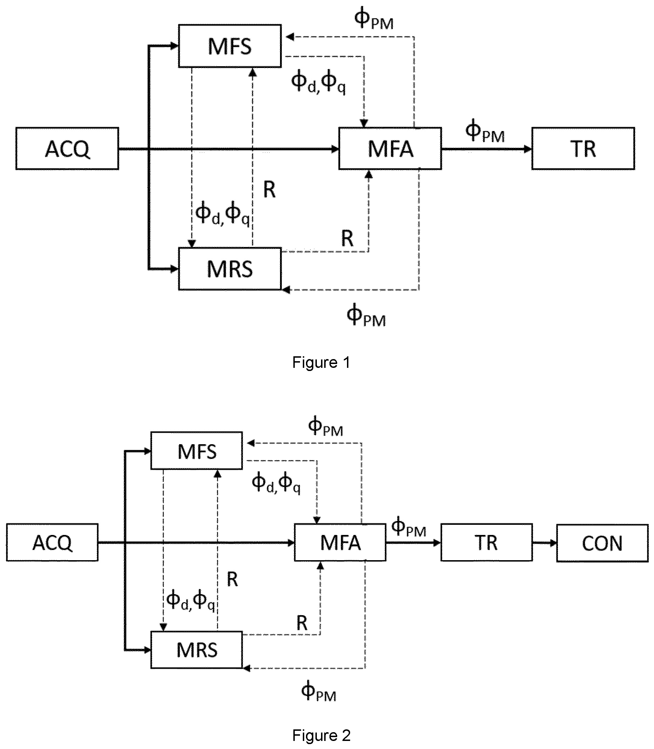

La figure 1 décrit, schématiquement et de manière non limitative, les étapes du procédé selon un mode de réalisation de l'invention. Dans un premier temps, on acquiert (ACQ) des courants, des tensions dans les phases du stator, ainsi que la position et/ou la vitesse de rotation du rotor. Puis, en parallèle on construit les trois modèles : le modèle de flux magnétique du stator (MFS), le modèle de flux magnétique des aimants permanents (MFA) et le modèle de résistance du stator (MRS). Les modèles sont interconnectés, en effet :

- Le modèle de flux magnétique du stator (MFS) permet de déterminer le flux magnétique du stator ($\Phi_d$, $\Phi_q$) qui est utilisé dans le modèle de flux magnétique des aimants permanents (MFA) et dans le modèle de résistance du stator (MRS),
- Le modèle de flux magnétique des aimants permanents (MFA) permet de déterminer le flux magnétique des aimants permanents ($\Phi_{PM}$) qui est utilisé dans le modèle de flux magnétique du stator (MFS) et dans le modèle de résistance du stator (MRS), et
- Le modèle de résistance du stator (MRS) permet de déterminer la résistance du stator (R) (appelée également résistance statorique) qui est utilisée dans le modèle de flux magnétique du stator (MFS) et dans le modèle de flux magnétique des aimants permanents (MFA).

Sur la figure, ces interconnexions sont illustrées par des flèches en trait pointillés. En appliquant ces modèles aux courants, tensions et vitesse de rotation acquises, on détermine le flux magnétique des aimants permanents $\Phi_{PM}$. Puis, au moyen d'un coefficient thermique du rotor et de ce flux magnétique des aimants permanents $\Phi_{PM}$, on détermine la température du rotor (TR).

Dans la suite de la description, les dérivées par rapport au temps sont indiquées par un point. Les notations indexées par la mention $_d$ (directe) ou $_q$ (quadrature) signifient que les grandeurs sont exprimées dans le repère de Park (repère tournant lié au rotor) via notamment l'acquisition de la position du rotor. De plus, les notations indiquées avec un accent circonflexe désignent une valeur estimée par un filtre de Kalman. En outre, les valeurs à l'état initial sont indiquées avec un 0 (t ou k = 0, t étant le temps continu et k le temps discret).

1) Acquisition des courants, des tensions et de la vitesse de rotation

Lors de cette étape, on acquiert en continu et en temps réel :

- les courants dans les phases du stator de la machine électrique,
- les tensions aux bornes des phases du stator de la machine électrique, et
- La position et/ou la vitesse électrique de rotation du rotor de la machine électrique.

Selon un mode de réalisation de l'invention, les courants, et/ou les tensions et/ou la position et/ou la vitesse de rotation peuvent être acquis à partir de mesures. En d'autres termes, cette étape peut comprendre la mesure d'au moins un des signaux acquis. La mesure permet d'améliorer la précision des signaux (courants, tensions, position et/ou vitesse de rotation), en effet, ils correspondent alors à ceux réellement présents au sein de la machine électrique.

Ces mesures peuvent être réalisées par des capteurs de tension et de courant instrumentant la machine électrique, de manière à mesurer les courants et les tensions dans les phases de la machine électrique, et/ou par un capteur de position angulaire ou de vitesse angulaire du rotor, de manière à mesurer la vitesse de rotation du rotor. Par exemple, pour la position ou la vitesse angulaire, on peut acquérir des signaux sinusoïdaux, et on peut en déduire la position angulaire et la vitesse de rotation du rotor.

Alternativement, les courants, et/ou les tensions et/ou la vitesse de rotation peuvent être acquis à partir d'un contrôleur de la machine électrique. Cette configuration permet de limiter l'instrumentation de la machine électrique.

Avantageusement, les signaux de tension et de courant acquis dans les phases peuvent être transformées en tensions ou courant dans le repère de Park (repère tournant lié au rotor), de manière à déterminer le courant direct, le courant en quadrature, la tension directe, et la tension en quadrature.

Selon un mode de réalisation de l'invention, la vitesse de rotation électrique $\omega_e$ du rotor peut être déterminée à partir de la vitesse de rotation mécanique du rotor, au moyen de la formule : $\omega_e = N\omega$, avec N le nombre de paires de pôles de la machine électrique et $\omega$ la vitesse de rotation mécanique dudit rotor.

Conformément à une mise en oeuvre de ce mode de réalisation, la vitesse de rotation mécanique du rotor peut être estimée, par toute méthode connue de l'homme du métier. Par exemple, la vitesse de rotation mécanique peut être estimée à partir d'une méthode de type boucle à phase asservie PLL (de l'anglais « phase-locked loop »). En variante, la méthode d'estimation de la vitesse de rotation mécanique peut être conforme à celle décrite dans la demande de brevet FR 2 984 637.

Alternativement, la vitesse de rotation mécanique du rotor peut être mesurée au moyen d'un capteur de vitesse angulaire placé sur la machine électrique.

En variante, la vitesse de rotation électrique peut être déterminée directement.

2) Construction du modèle de flux magnétique du stator

Lors de cette étape, on construit un modèle dynamique de flux magnétique du stator de la machine électrique. Le modèle dynamique du flux magnétique du stator est une équation différentielle qui relie le flux magnétique du stator aux courants et aux tensions des phases du stator de la machine électrique, et à la vitesse de rotation électrique du rotor. De plus, le modèle du flux magnétique du stator dépend de la résistance du stator et du flux magnétique des aimants permanents. Le modèle est dit dynamique car il est fonction de la vitesse de rotation du rotor.

Le modèle dynamique du flux magnétique du stator est une représentation d'état de la machine électrique. On rappelle qu'en théorie des systèmes (et en automatique), une représentation d'état permet de modéliser un système dynamique sous une forme matricielle, en utilisant des variables d'état. Cette représentation peut être linéaire ou non, continue ou discrète. La représentation permet de déterminer l'état interne et les sorties du système à n'importe quel instant futur si l'on connaît l'état à l'instant initial et le comportement des variables d'entrée qui influent sur le système.

Les dynamiques du flux magnétique d'aimants permanents $\phi_{PM}$ et celle de résistance statorique R sont lentes et peuvent être négligées par rapport à celles des composantes de flux magnétique du stator $\phi_d$ et $\phi_q$. C'est la raison pour laquelle on peut séparer l'estimation en trois modèles séparés : un pour les deux composantes de flux magnétique du stator $\phi_d$, $\phi_q$ ayant une dynamique rapide, et deux autres pour le flux magnétique d'aimants permanents $\phi_{PM}$ et la résistance statorique R ayant des dynamiques lentes. Pour des aspects temps réel, les deux modèles de flux magnétique des aimants permanents $\phi_{PM}$ et de résistance statorique R peuvent aussi être décorrélés.

La dynamique du flux magnétique du stator peut être exprimée par l'équation différentielle suivante :

$$\dot{\phi}_d = V_d - RI_d + \omega\phi_q$$

$$\dot{\phi}_q = V_q - RI_q - \omega(\phi_d + \phi_{PM})$$

Avec R la résistance du stator de la machine électrique, w la vitesse de rotation électrique, $\phi_d$ le flux magnétique direct, $\Phi_q$ le flux magnétique en quadrature, $\dot{\phi}_d$ la dérivée par rapport au temps du flux magnétique direct, $\dot{\phi}_q$ la dérivée par rapport au temps du flux magnétique en quadrature, $\phi_{PM}$ le flux magnétique des aimants permanents, $I_d$ le courant direct, $I_q$ le courant en quadrature, $V_d$ la tension directe, $V_q$ la tension en quadrature.

De plus, le système d'équations de l'ensemble des mesures peut être décrit par :

$$I_d = f_d(\phi_d, \phi_q, \phi_{PM})$$

$$I_q = f_q(\phi_d, \phi_q, \phi_{PM})$$

$$V_q = \omega\phi_{PM} + (\omega\phi_d + RI_q)$$

$$V_R = R\sqrt{\left(I_d^2 + I_q^2\right)}$$

Avec $f_d$ et $f_q$ des fonctions non linéaires pour les états $\phi_d$ $\phi_q$ et $\phi_{PM}$ (les fonctions non linéaires sont connues par des tables ou des cartographies de la machine électrique en particulier pour les machines synchro-reluctanctes), $V_R$ la tension de la résistance de stator qui peut être donnée par

$$V_R = \sqrt{\left(V_d + \omega\phi_q\right)^2 + \left(V_q - \omega(\phi_d + \phi_{PM})\right)^2}$$

Ainsi, conformément à une mise en oeuvre de l'invention, le modèle de flux magnétique du stator peut être défini par un modèle d'état avec une équation d'état de la forme : $\dot{X} = A(\omega)X + u$ avec

$$X = \begin{pmatrix} \phi_d \\ \phi_q \end{pmatrix}, u = \begin{pmatrix} V_d - RI_d \\ V_q - RI_q - \omega\phi_{PM} \end{pmatrix}, A(\omega) = \begin{pmatrix} 0 & \omega \\ -\omega & 0 \end{pmatrix}$$ et une équation de mesure de la forme :

$$y_1 = f(X, \phi_{PM}) \text{ avec } y_1 = \begin{pmatrix} I_d \\ I_q \end{pmatrix} \text{ et } f = \begin{pmatrix} f_d \\ f_q \end{pmatrix}.$$

Pour une machine synchro-reluctante, les inductances dans les axes d (direct) et q (en quadrature) sont aussi fonction des composantes des courants. Le système précédent est donc linéaire pour l'état et non linéaire pour la mesure.

### 3) Construction du modèle de flux magnétique des aimants permanents

Lors de cette étape, on construit un modèle dynamique de flux magnétique des aimants permanents du rotor de la machine électrique. Le modèle du flux magnétique des aimants permanents est une équation différentielle qui relie le flux magnétique des aimants permanents aux courants et aux tensions des phases du stator de la machine électrique, et à la vitesse de rotation électrique du rotor. De plus, le modèle du flux magnétique des aimants permanents dépend de la résistance du stator et du flux magnétique du stator. Cette dynamique est supposée nulle puisque le flux magnétique des aimants permanents évolue, principalement en fonction de sa température qui a une dynamique relativement lente.

Le modèle dynamique du flux magnétique des aimants permanents est une représentation d'état de la machine électrique. On rappelle qu'en théorie des systèmes (et en automatique), une représentation d'état permet de modéliser un système dynamique sous une forme matricielle, en utilisant des variables d'état. Cette représentation peut être linéaire ou non, continue ou discrète. La représentation permet de déterminer l'état interne et les sorties du système à n'importe quel instant futur si l'on connaît l'état à l'instant initial et le comportement des variables d'entrée qui influent sur le système.

La dynamique du flux magnétique du stator peut être exprimée par l'équation différentielle suivante :

$$\dot{\phi}_{PM} = 0$$

Ainsi, conformément à une mise en oeuvre de l'invention, le modèle de flux magnétique des aimants permanents peut être défini par un modèle d'état avec une équation d'état de la forme :
$\dot{\phi}_{PM} = 0$ et une équation de mesure $y_2 = \omega\phi_{PM} + (\omega\phi_d + RI_q)$ avec $y_2 = V_q$.

### 4) Construction du modèle de résistance du stator

Lors de cette étape, on construit un modèle dynamique de la résistance du stator de la machine électrique. Le modèle dynamique de la résistance du stator est une équation différentielle qui relie la résistance du stator aux courants et aux tensions des phases du stator de la machine électrique, et à la vitesse de rotation électrique du rotor. De plus, le modèle de résistance du stator dépend du flux magnétique des aimants permanents et du flux magnétique du stator. Cette dynamique est supposée nulle puisque la résistance du stator évolue, principalement en fonction de la température qui a une dynamique relativement lente. L'estimation de la résistance du stator permet de rendre plus robuste l'estimation du flux magnétique des aimants permanents.

Le modèle dynamique du flux magnétique des aimants permanents est une représentation d'état de la machine électrique. On rappelle qu'en théorie des systèmes (et en automatique), une représentation d'état permet de modéliser un système dynamique sous une forme matricielle, en utilisant des variables d'état. Cette représentation peut être linéaire ou non, continue ou discrète. La représentation permet de déterminer l'état interne et les sorties du système à n'importe quel instant futur si l'on connaît l'état à l'instant initial et le comportement des variables d'entrée qui influent sur le système.

La dynamique du flux magnétique du stator peut être exprimée par l'équation différentielle suivante :

$$\dot{R} = 0$$

Ainsi, conformément à une mise en oeuvre de l'invention, le modèle de flux magnétique des aimants permanents peut être défini par un modèle d'état avec une équation d'état de la forme :

$\dot{R}$ = 0 et une équation de mesure $y_3 = R\sqrt{(I_d^2 + I_q^2)}$ avec

$$y_3 = V_R = \sqrt{\left(V_d + \omega\phi_q\right)^2 + \left(V_q - \omega(\phi_d + \phi_{PM})\right)^2}.$$

5) Détermination du flux magnétique des aimants permanents

Lors de cette étape, on détermine le flux magnétique des aimants permanents au moyen des trois modèles construits aux étapes 2 à 4, et au moyen de trois filtres de Kalman et des signaux acquis à l'étape 1. Ainsi, les trois modèles interconnectés permettent de déterminer en temps réel le flux magnétique des aimants permanents. De plus, les trois modèles interconnectés permettent de déterminer également en temps réel le flux magnétique du stator et la résistance du stator.

Pour cette étape, on détermine le flux magnétique des aimants permanents en appliquant un filtre de Kalman linéaire au modèle de flux magnétique des aimants permanents, le modèle de flux magnétique des aimants permanents étant appliqué :

- Aux courants dans les phases du stator acquis,
- Aux tensions dans les phases du stator acquises,
- À la vitesse de rotation du rotor acquise,
- Au flux magnétique du stator déterminé par un filtre de Kalman sans parfum appliqué au modèle de flux magnétique du stator (on applique un filtre de Kalman sans parfum car le modèle de flux magnétique du stator est non linéaire) et aux signaux acquis,
- À la résistance du stator déterminée par un filtre de Kalman linéaire appliqué au modèle de résistance de stator et aux signaux acquis.

L'application du filtre de Kalman permet d'obtenir un observateur d'état. Dans le contexte discret, il est un estimateur récursif : pour estimer l'état courant, seule l'estimation de l'état précédent et les mesures actuelles sont nécessaires. Le filtre de Kalman linéaire comprend deux phases : une prédiction et une mise à jour (pour corriger l'état prédit dans le but d'obtenir une estimation plus précise). Le filtre de Kalman sans parfum (noté UKF de l'anglais « Unscented Kalman FIlter ») est un algorithme de filtrage qui utilise un modèle de système pour estimer l'état caché actuel d'un système, puis corrige l'estimation à l'aide des mesures de capteur disponibles. Le filtre de Kalman sans parfum peut être appliqué à un système non linéaire. La philosophie de l'UKF diffère du filtre de Kalman étendu (autre type de filtre de Kalman pouvant être appliqué à un système non linéaire) en ce sens qu'elle utilise la transformation sans parfum pour approcher directement la moyenne et la covariance de la distribution cible. Le filtre de Kalman sans parfum peut comporter les étapes de prédiction d'état et de correction des mesures, ces deux étapes étant précédées d'une étape préalable pour le calcul des « points sigma ». Les points sigma sont un ensemble d'échantillons calculés de manière à pouvoir propager de manière exacte les informations de moyenne et de covariance dans l'espace d'une fonction non linéaire.

Une telle détermination du flux magnétique des aimants permanents au moyen des modèles et des filtres de Kalman est une méthode stochastique, qui est stable dans un environnement bruité ou discontinu.

Selon un mode de réalisation de l'invention, le modèle de flux magnétique du stator (dans sa version discrète) peut dépendre de la résistance du stator et du flux magnétique des aimants permanents déterminés au pas de temps précédent. Etant donné que la dynamique du flux magnétique du stator est plus rapide que la dynamique du flux magnétique des aimants permanents et que la dynamique de la résistance de stator, ce mode de réalisation permet de conserver la robustesse et la précision de la détermination. Ce mode de réalisation permet d'appliquer les trois modèles interconnectés, pour une détermination en temps réel du flux magnétique des aimants permanents. De plus, selon une option de réalisation de l'invention, l'estimateur de flux magnétique de stator peut être exécuté en premier. Ainsi, l'estimateur de flux magnétique des aimants permanents et l'estimateur de la résistance statorique peuvent être mis en oeuvre avec le flux magnétique du stator déterminé au pas de temps actuel.

Conformément à une mise en oeuvre de l'invention, le flux magnétique du stator peut être déterminé à une fréquence supérieure à la fréquence de détermination du flux magnétique des aimants permanents et à la fréquence de détermination de la résistance du stator. Etant donné que la dynamique du flux magnétique du stator est plus rapide que la dynamique du flux magnétique des aimants permanents et que la dynamique de la résistance de stator, ce mode de réalisation permet de conserver la robustesse et la précision de la détermination. Cette mise en oeuvre permet d'appliquer les trois modèles interconnectés, pour une détermination en temps réel du flux magnétique des aimants permanents.

L'observateur de flux magnétique du stator est basé sur le modèle discret du flux magnétique du stator et qui peut être défini comme suit :

$$X(k) = A_d(k-1)X(k-1) + B_d(k-1)u(k-1) + \epsilon(k-1)$$

$$y_1(k) = f\left(X_k, \widehat{\phi}_{PM}(k)\right) + \eta(k)$$

où $A_d = e^{T_s A}$ et $B_d = \int_0^{T_s} e^{A(\tau)\tau} d\tau$ avec A la matrice de l'équation d'état du modèle de flux magnétique du stator, $T_s$ le pas de discrétisation du modèle, $\varepsilon(k)$ et $\eta(k)$ sont des bruits blancs à moyennes nulles avec des matrices de covariance $Q_X$ et $R_X$, respectivement.

La commande u(k) peut être décrite par :

$$u(k) = \begin{pmatrix} V_d(k) - \widehat{R}(k)I_d(k) \\ V_q(k) - \widehat{R}(k)I_q(k) - \omega(k)\widehat{\phi}_{PM}(k) \end{pmatrix}$$

Pour la suite, on utilise les notations suivantes :

- $\widehat{X}(k|k-1)$ est l'estimation de X à l'instant $t_k$ sachant sa valeur à l'instant $t_{k-1}$.
- $\widehat{X}(k|k)$ est l'estimation de X à l'instant $t_k$ à partir des mesures à l'instant $t_k$.
- $P(k|k-1)$ est la matrice de covariance de l'erreur de l'estimation à l'instant $t_k$ sachant sa valeur à l'instant $t_{k-1}$.
- $P(k|k)$ est la matrice de covariance de l'erreur de l'estimation à l'instant $t_k$ à partir des mesures à l'instant $t_k$.

La technique du filtre de Kalman sans parfum (UKF) est appliquée avec deux étapes, après une étape d'initialisation à k=0, du vecteur d'état et de l'état de la matrice de covariance.

- Première étape : Prédiction de l'état à l'instant k

$$\widehat{X}(k|k-1) = A_d(k)\widehat{X}(k-1|k-1) + B_d(k)u(k)$$

$$P(k|k-1) = A_d(k)P(k-1|k-1)A_d^T(k) + B_d(k)Q_X B_d^T(k)$$

- Deuxième étape : Correction de l'état avec la mesure à l'instant k :

$$K(k) = P_{xy}P_{yy}^{-1}$$

$$\widehat{X}(k|k) = \widehat{X}(k|k-1) + K(k)\big(y_1(k) - m_y\big)$$

$$P(k|k) = P(k|k-1) - K(k)P_{yy}K(k)^T$$

Après l'étape de prédiction, la distribution de R(k) est donnée par une distribution Gaussienne $\mathcal{N}$ ($m_x$, $P_x$) avec $m_X = \widehat{X}(k|k-1)$ et $P_X = P(k|k-1)$. Les points sigma associés à la moyenne $m_x$ et à la matrice $P_x$ peuvent, par exemple, être calculés comme suit :

$$\xi_0 = m_X$$

$$\xi_i = m_X + \sqrt{n+\lambda}\, S_i\,, i = \overline{1,n}$$

$$\xi_{i+n} = m_X - \sqrt{n+\lambda}\, S_i\,, i = \overline{1,n}$$

Avec $\lambda = \mu^2(n + \kappa) - n$

Avec $\mu$ un paramètre scalaire déterminant la dispersion des points sigma, et $\kappa$ un paramètre de redimensionnement secondaire, et n=2, et Si est une racine carrée de Px. Les points sigma se propagent dans le modèle de mesure sous la forme suivante, pour tout i compris entre 0 et 2n :

$$y_{1i}(k) = f\Big(\xi_i, \widehat{\phi}_{PM}(k)\Big)$$

L'étape suivante peut consister à calculer la moyenne prédite $m_y$, la covariance prédite de la mesure $P_{yy}$ et la covariance croisée de l'état de mesure $P_{xy}$ de la manière suivante :

$$m_y = \sum_{i=0}^{2n} W_i^m y_i(k)$$

$$P_{yy} = \sum_{i=0}^{2n} W_i^c (y_i - m_i)\,(y_i - m_i)^T + R_X$$

$$P_{xy} = \sum_{i=0}^{2n} W_i^c (\xi_i - m_X)\,(y_i - m_y)^T$$

avec $W_i^m$ et $W_i^c$ les poids de la moyenne prédite et de la covariance prédite, et $R_x$ la matrice de covariance du bruit de mesure.

Où K(k) est le gain de correction à l'instant k, $m_y$ la moyenne de mesures calculées via les sigmas points, $P_{yy}$ la covariance de mesure et $P_{xy}$ la covariance croisée entre l'état et la mesure. La procédure de calcul pour ces termes est détaillée dans la demande de brevet WO2022/228923 grâce à une technique spécifique « transformation sans parfum ».

Notons que les deux termes $\widehat{\phi}_{PM}(k)$ et $\widehat{R}(k)$ sont les deux paramètres estimés, respectivement, par les observateurs du flux d'aimant et de la résistance statorique présentés par la suite.

Pour le modèle de la résistance de stator, on peut considérer la forme discrétisée du modèle :

$$R(k) = R(k-1) + \epsilon_R(k)$$

$$y_3(k) = R(k)\sqrt{\left(I_d^2(k) + I_q^2(k)\right)} + \eta_R(k)$$

où $\epsilon_R(k)$ et $\eta_R(k)$ sont des bruits blancs à moyenne nulle avec des matrices de covariance $Q_R$ et $R_R$, respectivement. Pour ce modèle, on utilise un filtre de Kalman linéaire (KF) avec deux étapes à réaliser :

- Première étape : Prédiction à l'instant k

$$\widehat{R}(k|k-1) = \widehat{R}(k-1|k-1)$$

$$P_R(k|k-1) = P_R(k-1|k-1) + Q_R$$

- Deuxième étape : Mise à jour avec la mesure à l'instant k

$$K_R(k) = P_R(k|k-1)\sqrt{\left(I_d^2(k) + I_q^2(k)\right)}\, S_R(k)^{-1}$$

$$\widehat{R}(k|k) = \widehat{R}(k|k-1) + K_R(k)(y_{3m}(k) - z_R(k))$$

$$P_R(k|k) = P_R(k|k-1) - K_R(k)S_R(k)K_R(k)^T$$

Avec

$$y_{3m}(k) = \sqrt{\left(V_d(k) + \omega(k)\widehat{\phi}_q(k)\right)^2 + \left(V_q(k) - \omega(k)\left(\widehat{\phi}_d(k) + \widehat{\phi}_{PM}(k)\right)\right)^2}$$

$$S_R(k) = \left(I_d^2(k) + I_q^2(k)\right)P_R(k|k-1) + R_R$$

$$z_R(k) = \widehat{R}(k)\sqrt{\left(I_d^2(k) + I_q^2(k)\right)}$$

On peut remarquer que $\widehat{\phi}_d(k), \widehat{\phi}_q(k), \widehat{\phi}_{PM}(k)$ sont des variables estimées venant des observateurs du flux magnétique du stator et du flux magnétique des aimants permanents.

Pour le modèle du flux magnétique des aimants permanents, on peut considérer la forme discrétisée du modèle :

$$\phi_{PM}(k) = \phi_{PM}(k-1) + \epsilon_\phi(k)$$

$$y_2(k) = \omega(k)\phi_{PM}(k) + \left(\omega(k)\widehat{\phi}_d(k) + \widehat{R}(k)I_q(k)\right) + \eta_\phi(k)$$

où $\epsilon_\phi(k)$ et (k) sont de bruits blancs à moyenne nulle avec des matrices de covariance $Q_\phi$ et $R_\phi$, respectivement. Pour

ce modèle, on utilise le filtre de Kalman linéaire (KF) avec deux étapes à réaliser :

- Première étape : Prédiction à l'instant k

$$\widehat{\phi}_{PM}(k|k-1) = \widehat{\phi}_{PM}(k-1|k-1)$$

$$P_\phi(k|k-1) = P_\phi(k-1|k-1) + Q_\phi$$

- Deuxième étape : Mise à jour avec la mesure à l'instant k :

$$K_\phi(k) = P_\phi(k|k-1)\omega(k)S_\phi(k)^{-1}$$

$$\widehat{\phi}_{PM}(k|k) = \widehat{\phi}_{PM}(k|k-1) + K_\phi(k)\left(y_{2m}(k) - z_\phi(k)\right)$$

$$P_\phi(k|k) = P_\phi(k|k-1) - K_\phi(k)S_\phi(k)K_\phi(k)^T$$

Avec

$$y_{2m}(k) = V_q(k)$$

$$S_\phi(k) = \omega(k)^2 P_\phi(k|k-1) + R_\phi$$

$$z_\phi(k) = \omega(k)\widehat{\phi}_{PM}(k|k-1) + \left(\omega(k)\widehat{\phi}_d(k) + \widehat{R}(k)I_q(k)\right)$$

On peut remarquer que $\widehat{\phi}_d(k)$ et $\widehat{R}(k)$ sont des termes venant des observateurs de flux magnétique du stator et de résistance statorique.

6) Détermination de la température du rotor

Lors de cette étape, on détermine la température du rotor à partir du flux magnétique des aimants permanents déterminé à l'étape 5, et au moyen d'un coefficient thermique du rotor. En d'autres termes, on applique une équation qui relie la température du rotor au flux magnétique des aimants permanents, cette équation dépend d'un coefficient thermique des aimants permanents du rotor.

Selon un mode de réalisation de l'invention, on peut déterminer la température du rotor au moyen de l'équation suivante : $T_r = T_0 + \frac{1}{\beta}\left(1 - \frac{\widehat{\phi}_{PM}(T_r)}{\phi_{PM}(T_0)}\right)$ avec $T_r$ la température du rotor, $T_0$ la température ambiante, $\beta$ le coefficient thermique des aimants permanents du rotor, $\phi_{PM}(T_0)$ le flux magnétique des aimants permanents à la température ambiante prédéterminée, $\widehat{\phi}_{PM}(T_r)$ le flux magnétique des aimants permanents déterminé à l'étape 5 à la température du rotor.

Cette équation provient d'une relation linéaire entre la température du rotor et le flux magnétique des aimants permanents qui peut s'écrire :

$$\widehat{\phi}_{PM}(T_r) = \phi_{PM}(T_0) * \left(1 - \beta(T_r - T_0)\right).$$

Conformément à une mise en oeuvre de l'invention, on peut déterminer le coefficient thermique par une étape préalable expérimentale. Ainsi, on peut affiner la détermination de la température du rotor. Selon un exemple non limitatif, on peut placer la machine électrique dans une étuve de température contrôlée, et on peut appliquer plusieurs points de fonctionnement (régime et couple) à la machine électrique pour plusieurs températures de l'étuve. Pour chaque point de fonctionnement, on peut déterminer le flux magnétique des aimants permanents, par exemple au moyen des étapes 1 à 5. Ainsi, pour chaque point de fonctionnement de chaque température de l'étuve, on peut déterminer un coefficient thermique du rotor par inversion de l'équation décrite ci-dessus. Enfin, on peut déterminer le coefficient thermique par la médiane des coefficients thermiques déterminés pour l'ensemble des points de fonctionnement de chaque température de l'étuve.

L'invention concerne également un procédé de contrôle et/ou de surveillance d'une machine électrique. Le procédé de contrôle et/ou de surveillance met en oeuvre le procédé de détermination de la température du rotor selon l'invention et une étape supplémentaire de contrôle et/ou de surveillance de la machine électrique en fonction de la température de rotor déterminé.

Ainsi, pour ce procédé de contrôle et/ou de surveillance d'une machine électrique, on peut mettre en oeuvre les étapes suivantes :

a) On détermine la température du rotor au moyen du procédé de détermination de la température du rotor selon l'une quelconque des variantes ou des combinaisons de variantes décrites précédemment ; et
b) On contrôle et/ou on surveille la machine électrique en fonction de la température du rotor.

En d'autres termes, le procédé de contrôle de la machine électrique comprend les étapes suivantes :

1) Acquisition des courants, des tensions et de la vitesse de rotation
2) Construction du modèle de flux magnétique du stator
3) Construction du modèle de flux magnétique des aimants permanents
4) Construction du modèle de résistance du stator
5) Détermination du flux magnétique des aimants permanents
6) Détermination de la température du rotor
7) Contrôle et/ou surveillance de la machine électrique

La figure 2 décrit, schématiquement et de manière non limitative, les étapes du procédé selon un deuxième mode de réalisation de l'invention. Les étapes précédemment décrites pour la figure 1 ne sont pas redétaillées. Ce mode de réalisation comprend en outre une étape supplémentaire de contrôle (CON) et/ou de surveillance de la machine électrique en fonction de la température du rotor (TR).

Par exemple, le contrôle de la machine électrique peut être basé sur une méthode de contrôle direct du couple (en anglais « direct torque control method ») performante, et particulièrement adaptée pour les machines électriques synchrones à pôles saillants. Il peut s'agir par exemple d'une stratégie de contrôle de type MTPA ou MTPV (respectivement de l'anglais « Maximum Torque per Ampere » pouvant être traduit par couple maximum par ampère, et « Maximum Torque per Voltage » pouvant être traduit par couple maximum par volt). La surveillance de la température du rotor, peut consister en une comparaison de la température de rotor déterminée avec un seuil de température, et si la température du rotor déterminée est supérieure à un seuil, on peut prévoir de donner une alerte (voyant par exemple), d'augmenter le refroidissement du rotor (par exemple au moyen d'une circulation d'un fluide), ou de réduire les performances de la machine électrique (réduction du régime et/ou du couple) de manière à réduire la température du rotor.

En outre, l'invention concerne un système de contrôle et/ou de surveillance d'une machine électrique, notamment une machine électrique synchrone, adapté à appliquer le procédé tel que décrit ci-dessus. Un tel système de contrôle de machine électrique peut comprendre des moyens de contrôle de la machine électrique comportant des moyens de détermination de la température du rotor de la machine électrique et des moyens de contrôle ou de surveillance de la machine électrique. Les moyens de détermination de la température du rotor déterminent la température du rotor à partir des signaux de courants et de tensions et de vitesse de rotation du rotor. Il s'agit des courants et des tensions de chacune des trois phases de la machine électrique. Les moyens de contrôle ou de surveillance appliquent des tensions aux bornes de la machine électrique en fonction du couple afin d'assurer une consigne de couple pour la machine électrique. Avantageusement, le système de contrôle et/ou de surveillance peut être un contrôleur comprenant des moyens informatiques.

Ce procédé et ce système de contrôle et/ou de surveillance, peuvent être utilisés pour une machine électrique embarquée à bord d'un véhicule, notamment à bord d'un véhicule automobile électrique ou hybride. Toutefois, le système de commande décrit n'est pas limité à cette application et convient pour toutes les applications des machines électriques, y compris les applications stationnaires.

Comme il va de soi, l'invention ne se limite pas aux seules formes de réalisation des procédés et du système décrits ci-dessus à titre d'exemple, elle embrasse au contraire toutes les variantes de réalisation.

Exemples d'application

Les caractéristiques et avantages du procédé selon l'invention apparaîtront plus clairement à la lecture des exemples d'application ci-après.

Pour cet exemple d'application, on simule le fonctionnement d'une machine électrique. La simulation est réalisée pour une machine synchro-reluctante à quatre paires de pôles et alimentée par 350 V DC.

Pour bien illustrer l'estimation concernée, une température allant de 20 à 140°C est imposée au rotor de la machine. De plus, on impose à la machine électrique un régime allant de 500 à 8000 tr/min pour accéder à des zones de fonctionnement plus exigeantes, telles que la zone de defluxage avec le maximum de couple qui peut être obtenu pour la tension maximale disponible ; c'est la zone connue comme « Maximum Torque Per Volt » (pouvant être traduit par maximum de couple par volt », dans cette zone, le courant $I_d$ doit monter en valeur absolue pour défluxer le moteur). De plus, la température de stator ($T_s$) est introduite par la variation de la résistance de stator par le biais de la relation thermique suivante :

$$R(T_s) = R_0(1 + \alpha(T_s - T_0))$$

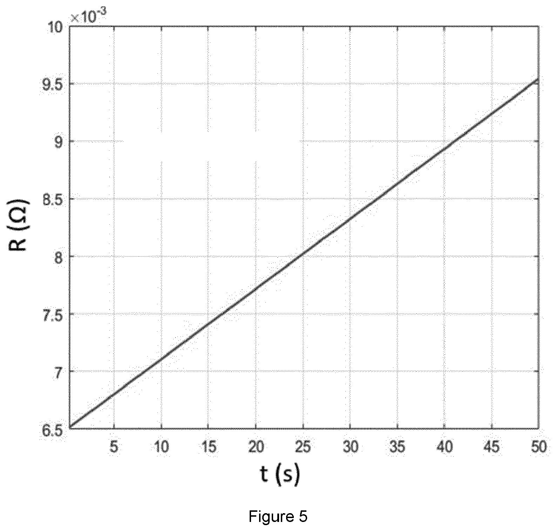

avec $\alpha$ le coefficient de résistivité thermique de cuivre et $R_0$ la résistance du stator prise à la température ambiante $T_0$. La variation de résistance du stator R en $\Omega$ en fonction du temps t en s dans la simulation est présentée en figure 5.

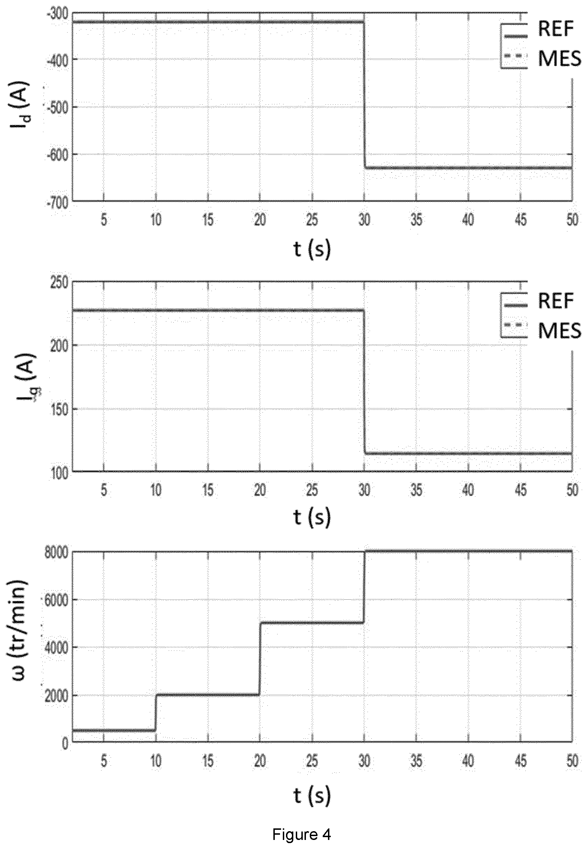

La figure 4 illustre les courbes des signaux acquis en fonction du temps t en s, le courant direct Id en A, le courant en quadrature Iq en A, et la vitesse de rotation mécanique w en tr/min. Pour les courbes des courants, on représente la courbe de référence REF et la courbe mesurée MES. On observe que les courbes sont superposées. De plus, on peut observer que les courants varient à t=30s, ce qui correspond à l'entrée dans la zone de défluxage.

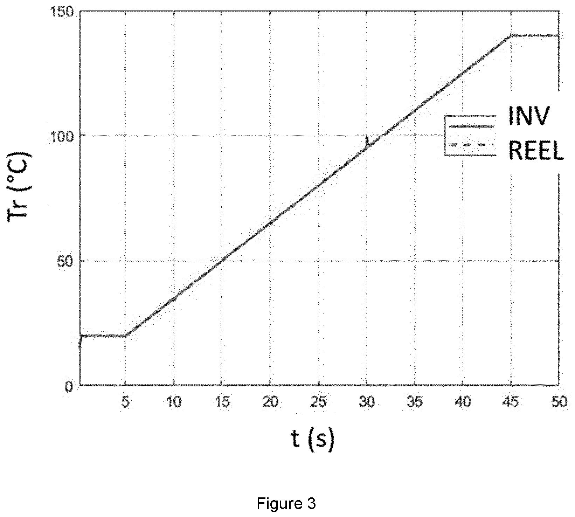

La figure 3 compare la valeur réelle REEL et l'estimation INV de la température du rotor Tr en °C en fonction du temps t en s, quand la vitesse de rotation varie de 500rpm à 8000rpm pendant 40s. L'estimation INV est réalisée par la mise en oeuvre du procédé selon un mode de réalisation de l'invention au moyen des mesures illustrées en figure 4. Les deux courbes sont superposées. On peut donc observer que l'estimation de la température au moyen du procédé selon l'invention est parfaitement adaptée au changement de condition de fonctionnement et à la dynamique imposée.

Par conséquent, le procédé selon l'invention permet de déterminer précisément et de manière robuste la température du rotor, pour toute condition de fonctionnement de la machine électrique.

**Revendications**

1. Procédé de détermination en temps réel de la température d'un rotor d'une machine électrique, ladite machine électrique comportant un stator et un rotor pourvu d'aimants permanents, **caractérisé en ce qu'**on met en oeuvre les étapes suivantes :

   a. On acquiert (ACQ) les courants et les tensions dans des phases dudit stator, ainsi que la position et/ou la vitesse de rotation dudit rotor ;
   b. On construit un modèle dynamique de flux magnétique desdits aimants permanents du rotor (MFA), ledit modèle de flux magnétique des aimants permanents reliant ledit flux magnétique des aimants permanents aux courants et aux tensions dans lesdites phases du stator, à la vitesse de rotation du rotor, ainsi qu'au flux magnétique dudit stator et à la résistance dudit stator ;
   c. On construit un modèle dynamique de flux magnétique dudit stator (MFS), ledit modèle de flux magnétique du stator reliant ledit flux magnétique du stator aux courants et aux tensions dans lesdites phases du stator, à la vitesse de rotation du rotor, ainsi qu'au flux magnétique des aimants permanents et à la résistance dudit stator ;
   d. On construit un modèle dynamique de la résistance dudit stator (MRS), ledit modèle de la résistance du stator reliant la résistance du stator aux courants et aux tensions dans lesdites phases du stator, à la vitesse de rotation du rotor, ainsi qu'au flux magnétique dudit stator et au flux magnétique desdits aimants permanents ;
   e. On détermine le flux magnétique desdits aimants permanents en appliquant un filtre de Kalman linéaire audit modèle de flux magnétique des aimants permanents (MFA), ledit modèle de flux magnétique des aimants permanents étant appliqué aux courants et aux tensions acquis et à la vitesse du rotor acquise, ainsi qu'au flux magnétique dudit stator déterminé par un filtre de Kalman sans parfum appliqué audit modèle de flux magnétique du stator (MFS), et à la résistance du stator déterminée par un filtre de Kalman linéaire appliqué audit modèle de résistance du stator (MRS) ; et
   f. On détermine la température dudit rotor (TR) à partir dudit flux magnétique desdits aimants permanents déterminé et au moyen d'un coefficient thermique des aimants permanents dudit rotor.

**2.** Procédé selon la revendication 1, dans lequel on détermine la température du rotor (TR) au moyen de la formule suivante : $T_r = T_0 + \frac{1}{\beta}\left(1 - \frac{\hat{\phi}_{PM}(T_r)}{\phi_{PM}(T_0)}\right)$ avec $T_r$ la température du rotor, $T_0$ la température ambiante, $\beta$ ledit coefficient thermique des aimants permanents du rotor, $\phi_{PM}(T_0)$ le flux magnétique des aimants permanents à la température ambiante, $\phi_{PM}(T_r)$ le flux magnétique des aimants permanents déterminé à la température du rotor.

**3.** Procédé selon l'une des revendications précédentes, dans lequel on détermine ledit coefficient thermique du rotor par une étape préalable expérimentale.

**4.** Procédé selon l'une des revendications précédentes, dans lequel on acquiert (ACQ) lesdits courants et/ou lesdites tensions dans les phases du stator et/ou la position et/ou la vitesse du rotor par mesure.

**5.** Procédé selon l'une des revendications précédentes, dans lequel ledit modèle de flux magnétique du stator (MFS) est défini par un modèle d'état avec une équation d'état de la forme : $\dot{X} = A(\omega)X + u$ avec

$$X = \begin{pmatrix} \phi_d \\ \phi_q \end{pmatrix}, \quad u = \begin{pmatrix} V_d - RI_d \\ V_q - RI_q - \omega\phi_{PM} \end{pmatrix}, \quad A(\omega) = \begin{pmatrix} 0 & \omega \\ -\omega & 0 \end{pmatrix}$$ et une équation de mesure de la forme : $y_1$

$= f(X, \phi_{PM})$ avec $y_1 = \begin{pmatrix} I_d \\ I_q \end{pmatrix}$ et $f = \begin{pmatrix} f_d \\ f_q \end{pmatrix}$, $\phi_d$, $\phi_q$ étant le flux magnétique du stator dans le repère de Park, $V_d$, $V_q$ les tensions dans les phases du stator dans le repère de Park, $I_d$, $I_q$ les courants dans les phases du stator dans le repère de Park, w la vitesse de rotation du rotor, $\phi_{PM}$ le flux magnétique des aimants permanents, R la résistance du stator, $f_d$, $f_q$ les fonctions non linéaires dans les phases du stator dans le repère de Park.

**6.** Procédé selon l'une des revendications précédentes, dans lequel ledit modèle de flux magnétique des aimants permanents (MFA) est défini par un modèle d'état avec une équation d'état de la forme : $\dot{\phi}_{PM} = 0$ et une équation de mesure $y_2 = \omega\phi_{PM} + (\omega\phi_d + RI_q)$ avec $y_2 = V_q$, $\phi_d$ étant le flux magnétique du stator direct dans le repère de Park, $V_q$ les tensions en quadrature dans les phases du stator dans le repère de Park, $I_q$ les courants en quadrature dans les phases du stator dans le repère de Park, w la vitesse de rotation du rotor, $\phi_{PM}$ le flux magnétique des aimants permanents, R la résistance du stator.

**7.** Procédé selon l'une des revendications précédentes, dans lequel ledit modèle de la résistance de stator (MRS) est défini par un modèle d'état avec une équation d'état de la forme : $\dot{R} = 0$ et une équation de mesure de la forme

$$y_3 = R\sqrt{(I_d^2 + I_q^2)} \quad \text{avec} \quad y_3 = V_R = \sqrt{(V_d + \omega\phi_q)^2 + (V_q - \omega(\phi_d + \phi_{PM}))^2}$$, $\phi_d$, $\phi_q$ étant le flux magnétique du stator dans le repère de Park, $V_d$, $V_q$ les tensions dans les phases du stator dans le repère de Park, $I_d$, $I_q$ les courants dans les phases du stator dans le repère de Park, w la vitesse de rotation du rotor, $\phi_{PM}$ le flux magnétique des aimants permanents, R la résistance du stator.

**8.** Procédé selon l'une des revendications précédentes, dans lequel ledit modèle de flux magnétique du stator (MFS) dépend de la résistance du stator et du flux magnétique des aimants permanents déterminés au pas de temps précédent.

**9.** Procédé selon l'une des revendications précédentes, dans lequel le flux magnétique du stator est déterminé à une fréquence supérieure à la fréquence de détermination du flux magnétique des aimants permanents et de la résistance du stator.

**10.** Procédé de contrôle et/ou de surveillance d'une machine électrique, **caractérisé en ce qu'**on met en oeuvre les étapes suivantes :

a. On détermine la température du rotor (TR) au moyen du procédé de détermination de la température du rotor selon l'une des revendications précédentes ; et

b. On contrôle et/ou on surveille (CON) ladite machine électrique au moyen de ladite température du rotor déterminée.

**11.** Système de contrôle et/ou de surveillance d'une machine électrique comprenant une machine électrique et un contrôleur pour mettre en oeuvre le procédé de contrôle et/ou de surveillance selon la revendication 10.

Figure 1

Figure 2

Figure 3

Figure 4

Figure 5

Europäisches
Patentamt

European
Patent Office

Office européen
des brevets

# RAPPORT DE RECHERCHE EUROPEENNE

Numéro de la demande

EP 24 15 3376

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 9 503 010 B2 (HYUNDAI MOBIS CO LTD [KR]) 22 novembre 2016 (2016-11-22) * le document en entier * | 1-11 | INV. H02P29/66 |
| X | CN 111 917 350 A (UNIV SOUTHEAST) 10 novembre 2020 (2020-11-10) * le document en entier * | 1-11 | |
| A | JP 2005 218215 A (NSK LTD) 11 août 2005 (2005-08-11) * le document en entier * | 1-11 | |
| A | US 2011/181217 A1 (VOLLMER ULRICH [DE] ET AL) 28 juillet 2011 (2011-07-28) * le document en entier * | 1-11 | |
| X | US 2012/212169 A1 (WU LONG [US] ET AL) 23 août 2012 (2012-08-23) * le document en entier * | 1-11 | |
| A | LEE HYEONJUN ET AL: "Airgap Flux-based Estimation of Permanent Magnet Temperature for Thermal Protection of PMSMs", 2022 IEEE ENERGY CONVERSION CONGRESS AND EXPOSITION (ECCE), IEEE, 9 octobre 2022 (2022-10-09), pages 1-8, XP034235096, DOI: 10.1109/ECCE50734.2022.9947589 * le document en entier * | 1-11 | **DOMAINES TECHNIQUES RECHERCHES (IPC)** H02P |

Le présent rapport a été établi pour toutes les revendications

| Lieu de la recherche | Date d'achèvement de la recherche | Examinateur |
|---|---|---|
| Munich | 27 mai 2024 | Fraïssé, Stéphane |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 15 3376

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-05-2024

| Document brevet cité au rapport de recherche | | Date de publication | Membre(s) de la famille de brevet(s) | | Date de publication |
|---|---|---|---|---|---|
| US 9503010 | B2 | 22-11-2016 | CN | 105227019 A | 06-01-2016 |
| | | | DE | 102015207185 A1 | 10-12-2015 |
| | | | KR | 20150141347 A | 18-12-2015 |
| | | | US | 2015357954 A1 | 10-12-2015 |
| CN 111917350 | A | 10-11-2020 | AUCUN | | |
| JP 2005218215 | A | 11-08-2005 | AUCUN | | |
| US 2011181217 | A1 | 28-07-2011 | DE | 102008040725 A1 | 28-01-2010 |
| | | | EP | 2318818 A1 | 11-05-2011 |
| | | | US | 2011181217 A1 | 28-07-2011 |
| | | | WO | 2010009984 A1 | 28-01-2010 |
| US 2012212169 | A1 | 23-08-2012 | AU | 2012220884 A1 | 12-09-2013 |
| | | | BR | 112013021505 A2 | 21-07-2020 |
| | | | CN | 103931096 A | 16-07-2014 |
| | | | EP | 2678939 A2 | 01-01-2014 |
| | | | JP | 2014515244 A | 26-06-2014 |
| | | | US | 2012212169 A1 | 23-08-2012 |
| | | | WO | 2012115897 A2 | 30-08-2012 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- EP 2806556 A
- US 9383265 B
- US 20150381091 A
- US 8222844 B
- US 20150200614 A
- FR 2984637
- WO 2022228923 A